(19) Europäisches Patentamt
European Patent Office
Office européen des brevets

(11) **EP 3 466 904 B1**

(12) **EUROPÄISCHE PATENTSCHRIFT**

(45) Veröffentlichungstag und Bekanntmachung des Hinweises auf die Patenterteilung:
**06.11.2019 Patentblatt 2019/45**

(51) Int Cl.:
*C04B 35/043* (2006.01)     *C04B 35/103* (2006.01)
*C04B 35/482* (2006.01)     *C04B 35/56* (2006.01)
*C04B 35/622* (2006.01)     *C04B 35/632* (2006.01)
*C04B 35/634* (2006.01)     *C04B 35/64* (2006.01)

(21) Anmeldenummer: **17194678.3**

(22) Anmeldetag: **04.10.2017**

(54) **VERSATZ ZUR HERSTELLUNG EINES FEUERFESTEN KOHLENSTOFFGEBUNDENEN STEINES, EIN VERFAHREN ZUR HERSTELLUNG EINES FEUERFESTEN KOHLENSTOFFGEBUNDENEN STEINES SOWIE EINE VERWENDUNG VON TI2ALC**

BATCH FOR PRODUCING A REFRACTORY CARBON-BONDED BRICK, A METHOD FOR PRODUCING A REFRACTORY CARBON-BONDED BRICK AND USE OF TI2ALC

BANDE DESTINÉE À LA FABRICATION D'UNE PIERRE RÉFRACTAIRE À LIANT AU CARBONE, PROCÉDÉ DE FABRICATION D'UNE PIERRE RÉFRACTAIRE À LIANT AU CARBONE AINSI QU'UNE UTILISATION DE TI2ALC

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**10.04.2019 Patentblatt 2019/15**

(73) Patentinhaber: **Refractory Intellectual Property GmbH & Co. KG**
**1100 Wien (AT)**

(72) Erfinder:
• **ATZENHOFER, Christina**
**8932 St. Gallen (AT)**

• **HARMUTH, Harald**
**8700 Leoben (AT)**
• **NILICA, Roland**
**8715 St. Marein-Feistritz (AT)**
• **FREIBERGER, Norbert**
**8054 Graz (AT)**

(74) Vertreter: **Berkenbrink, Kai-Oliver et al**
**Patentanwälte Becker & Müller**
**Turmstrasse 22**
**40878 Ratingen (DE)**

(56) Entgegenhaltungen:
**EP-A1- 3 029 005          WO-A1-2017/152952**
**KR-A- 20040 106 622**

**Beschreibung**

Die Erfindung betrifft einen Versatz zur Herstellung eines feuerfesten kohlenstoffgebundenen Steines, ein Verfahren zur Herstellung eines feuerfesten kohlenstoffgebundenen Steines sowie eine Verwendung von $Ti_2AlC$.

Mit einem "Versatz" wird in der Feuerfesttechnologie bekanntermaßen eine Zusammensetzung aus einer oder mehreren Komponenten beziehungsweise Rohstoffen bezeichnet, durch die mittels einer Temperaturbehandlung, also insbesondere mittels eines keramischen Brandes, ein feuerfestes Erzeugnis herstellbar ist.

Als ein solch feuerfestes Erzeugnis sind feuerfeste kohlenstoffgebundene Steine bekannt. Solche kohlenstoffgebundenen Steine werden hergestellt auf Basis eines Versatzes, der eine feuerfeste Grundkomponente sowie Graphit umfasst. Diese Komponenten werden unter Zugabe eines verkokenden Bindemittels, üblicherweise Pech oder Kunstharz, miteinander vermischt und anschließend derart mit Temperatur beaufschlagt, dass sich leicht flüchtige Bestandteile des Bindemittels verflüchtigen. Diese Temperaturbeaufschlagung wird auch als "Tempern" bezeichnet. Bei einer weiteren Temperaturbeaufschlagung, die auch als "Verkokung" bezeichnet wird, verkokt das Bindemittel. Im getemperten oder verkokten Zustand weist der aus dem Versatz hergestellte Stein bereits eine gewisse Festigkeit auf und kann beispielsweise an seinen beabsichtigten Einsatzort, regelmäßig eine Anlage zur sekundärmetallurgischen Behandlung einer Stahlschmelze, transportiert und dort installiert werden. Unter den im Betriebseinsatz herrschenden Temperaturen bildet der Kohlenstoff schließlich eine Kohlenstoffbindung aus. Auf Basis der feuerfesten Grundkomponente Magnesia sowie einer Kohlenstoffkomponente hergestellte kohlenstoffgebundene Steine werden auch als "Magnesiakohlenstoffsteine", und auf Basis der feuerfesten Grundkomponenten Magnesia und Alumina sowie einer Kohlenstoffkomponente hergestellte kohlenstoffgebundene Steine werden auch als "Alumina-Magnesia-Kohlenstoffsteine" bezeichnet.

Derartige feuerfeste kohlenstoffgebundene Steine zeichnen sich durch eine hohe Verschleißfestigkeit, Gefügeflexibilität und Temperaturwechselbeständigkeit aus.

Als feuerfeste Grundkomponente werden regelmäßig oxidische feuerfeste Rohstoffe verwendet, insbesondere Rohstoffe auf Basis Magnesia, Rohstoffe auf Basis Alumina und Rohstoffe auf Basis Magnesiaspinell.

Für die Kohlenstoffkomponente werden Rohstoffe eingesetzt, die überwiegend aus freiem Kohlenstoff bestehen, insbesondere Graphit und Ruß.

Um eine Oxidation des Kohlenstoffs der Kohlenstoffkomponente, insbesondere auch während der Herstellung des Steines aus dem Versatz, zu unterdrücken, ist es bekannt, den Versatz mit sogenannten Antioxidantien zu versehen. Als besonders wirksame Antioxidantien sind insbesondere Metallpulver aus Aluminium sowie Aluminiumlegierungen, beispielsweise Al-Si oder Al-Mg, bekannt. Durch solche Antioxidantien auf Basis metallischen Aluminiums kann eine Oxidation des Kohlenstoffs der Kohlenstoffkomponente zwar unterdrückt werden. Bei den hohen Temperaturen während des Betriebseinsatzes des kohlenstoffgebundenen Steines reagiert das metallische Aluminium jedoch gemäß der folgenden Gleichung mit dem Kohlenstoff des kohlenstoffgebundenen Steines zu $Al_4C_3$:

$$4 \ Al + 3 \ C = Al_4C_3$$

Die Gegenwart dieses Aluminiumcarbides $Al_4C_3$ ist während der hohen Temperaturen im Betriebseinsatz des Steines zwar unproblematisch. Allerdings hydratisiert $Al_4C_3$ sehr leicht bei Raumtemperatur. Dies kann dazu führen, dass der kohlenstoffgebundene Stein bei einer Abkühlung, beispielsweise nach seinem Betriebseinsatz, Aluminiumhydroxid gemäß der folgenden Gleichung bildet:

$$Al_4C_3 + 12 \ H_2O = 4 \ Al(OH)_3 + 3 \ CH_4$$

Diese Bildung von Aluminiumhydroxid ist mit einer Volumenzunahme verbunden, was bereits zu einer Beschädigung oder Zerstörung des kohlenstoffgebundenen Steines führen kann. Insbesondere eine Wiedererwärmung eines kohlenstoffgebundenen Steines, welcher ein solches Aluminiumhydroxid enthält, würde auf Grund der Dehydrierung jedoch zur Zerstörung des kohlenstoffgebundenen Steines führen. Da es auch nicht möglich ist, Aluminiumhydroxid aus dem kohlenstoffgebundenen Stein zu entfernen, können feuerfeste kohlenstoffgebundene Steine, die $Al_4C_3$ enthalten, derzeit nicht wiederverwertet werden.

KR 2004 0106622 A beschreibt die Herstellung von $Ti_2AlC$ zur Verwendung als Strukturkeramik in Maschinen.

Der Erfindung liegt die Aufgabe zugrunde, einen Versatz zur Herstellung eines feuerfesten kohlenstoffgebundenen Steines zur Verfügung zu stellen, welcher ein Antioxidans zur Unterdrückung der Oxidation der Kohlenstoffkomponente umfasst, wobei das Antioxidans während des Betriebseinsatzes des kohlenstoffgebundenen Steines keine hydratisierbaren Substanzen bildet.

Eine weitere Aufgabe der Erfindung besteht darin, ein Verfahren zur Herstellung eines feuerfesten kohlenstoffgebundenen Steines zur Verfügung zu stellen, durch den ein feuerfester kohlenstoffgebundener Stein herstellbar ist, der wirksam gegen eine Oxidation des Kohlenstoffs geschützt ist und in dem sich während eines Betriebseinsatzes keine hydratisierbaren Substanzen bilden.

Zur Lösung der Aufgabe wird erfindungsgemäß zur Verfügung gestellt ein Versatz zur Herstellung eines feuerfesten kohlenstoffgebundenen Steines, welcher die folgenden Komponenten umfasst:

Eine feuerfeste Grundkomponente;
eine Kohlenstoffkomponente; und
$Ti_2AlC$.

Die Erfindung beruht auf der überraschenden Grunderkenntnis, dass $Ti_2AlC$ ein sehr wirksames Antioxidans in Versätzen zur Herstellung von feuerfesten kohlenstoffgebundenen Steinen darstellt, welches während des Betriebseinsatzes des aus dem Versatz herstellbaren kohlenstoffgebundenen Steines gleichzeitig keine hydratisierbaren Substanzen bildet. Erfindungsgemäß hat sich herausgestellt, dass durch $Ti_2AlC$ während des Aufheizens des Versatzes zur Herstellung des feuerfesten kohlenstoffgebundenen Steines sowie während des Betriebseinsatzes des aus dem Versatz hergestellten kohlenstoffgebundenen Steines eine Oxidation des Kohlenstoffs wirksam unterdrückt werden kann. Die Wirksamkeit von $Ti_2AlC$ entspricht dabei im Wesentlichen der Wirksamkeit von metallischem Aluminium als Antioxidans.

Gleichzeitig bildet $Ti_2AlC$ während des Aufheizens des Versatzes und des Betriebseinsatzes des kohlenstoffgebundenen Steines keinerlei hydratisierbare Substanzen oder auch sonstige Substanzen, durch die die Eigenschaften des kohlenstoffgebundenen Steines während seines Betriebseinsatzes oder danach verschlechtert würden.

Insbesondere hat sich erfindungsgemäß auch herausgestellt, dass sich durch die Verwendung von $Ti_2AlC$ als Antioxidans in gattungsgemäßen Versätzen zur Herstellung eines feuerfesten kohlenstoffgebundenen Steines während des Betriebseinsatzes des kohlenstoffgebundenen Steines keinerlei Substanzen bilden, die einer Wiederverwendbarkeit des kohlenstoffgebundenen Steines nach seinem Betriebseinsatz entgegenstehen würden. Insoweit lassen sich kohlenstoffgebundenen Steine, in denen $Ti_2AlC$ als Antioxidans verwendet wurde, hervorragend recyceln.

Bei $Ti_2AlC$ handelt es sich um eine so genannte MAX-Phase. MAX-Phasen kombinieren metallische und keramische Eigenschaften. Insoweit besitzen MAX-Phasen beispielsweise einen hohen Schmelzpunkt, eine gute thermische und elektrische Leitfähigkeit, eine hohe Festigkeit, eine gute Thermoschockbeständigkeit und sind mit konventionellen Werkzeugen leicht bearbeitbar. Insoweit wurde $Ti_2AlC$ bislang beispielsweise für Turbinenschaufeln und Heizelemente eingesetzt.

Überraschend hat sich im Rahmen der Erfindung auch herausgestellt, dass durch die Verwendung von $Ti_2AlC$ als Antioxidans in einem Versatz zur Herstellung eines feuerfesten kohlenstoffgebundenen Steines die Duktilität des aus dem Versatz hergestellten kohlenstoffgebundenen Steines erheblich verbessert werden kann. Insoweit weist ein solcher kohlenstoffgebundener Stein ein verbessertes Sprödigkeitsverhalten beziehungsweise eine höhere Gefügeelastizität auf. Dies zeigt sich insbesondere an einem reduzierten Elastizitätsmodul (E-Modul) von feuerfesten kohlenstoffgebundenen Steinen, die unter Verwendung von $Ti_2AlC$ als Antioxidans hergestellt wurden, im Gegensatz zu solchen feuerfesten kohlenstoffgebundenen Steinen, die ohne ein Antioxidans in Form von $Ti_2AlC$ hergestellt wurden.

Bevorzugt liegt $Ti_2AlC$ in einem Anteil im Bereich von 1 bis 10 Masse-% im Versatz vor, bezogen auf die Gesamtmasse des Versatzes. Liegt $Ti_2AlC$ unter einem Anteil von 1 Masse-% vor, ist die Wirkung von $Ti_2AlC$ als Antioxidans sowie zur Verbesserung der Duktilität des kohlenstoffgebundenen Steines reduziert. Liegt $Ti_2AlC$ in einem Anteil über 10 Masse-% im Versatz vor, wurde erfindungsgemäß festgestellt, dass in diesem Fall die Eigenschaften des aus dem Versatz hergestellten feuerfesten kohlenstoffgebundenen Steines verschlechtert werden können. Insoweit wurde erfindungsgemäß festgestellt, dass die Kaltdruckfestigkeit des aus dem Versatz hergestellten kohlenstoffgebundenen Steines in diesem Fall verschlechtert werden kann. Die Erfinder vermuten, dass dies an der Wirkung der aus $Ti_2AlC$ während des Betriebseinsatzes gebildeten Reaktionsprodukte im kohlenstoffgebundenen Stein liegt. So vermuten die Erfinder, dass der Aluminiumanteil des $Ti_2AlC$ während des Betriebseinsatzes mit weiteren Stoffen des Versatzes zu Substanzen reagiert, die als Flexibilisierer beziehungsweise Elastifizierer im Versatz wirken. So vermuten die Erfinder, dass das Aluminium des $Ti_2AlC$, soweit die feuerfeste Grundkomponente einen Rohstoff auf Basis Magnesia umfasst, mit MgO der Grundkomponente zu Magnesiaspinell ($MgAl_2O_4$ beziehungsweise $MgO \cdot Al_2O_3$) reagiert, der in dem aus dem Versatz hergestellten kohlenstoffgebundenen Steines als Flexibilisierer wirkt. Bekanntermaßen beruht die Wirksamkeit solcher Flexibilisierer in einem feuerfesten Erzeugnis darauf, dass diese Mikrorisse im Gefüge des Erzeugnisses bilden, auf Grund derer die Duktilität des Erzeugnisses erhöht wird. Ab einem bestimmten Anteil der Flexibilisierer kann die Festigkeit des Erzeugnisses jedoch stark abfallen, so dass Flexibilisierer nur bis zu einem bestimmten Anteil in einem Erzeugnis tolerierbar sind. Die Erfinder vermuten, dass dieser tolerierbare Anteil an einem aus $Ti_2AlC$ und MgO gebildeten Flexibilisierer erreicht ist, wenn $Ti_2AlC$ mit einer Obergrenze von 10 Masse-% im Versatz vorliegt.

Erfindungsgemäß hat sich herausgestellt, dass ein aus dem Versatz hergestellter feuerfester kohlenstoffgebundener Stein die besten Eigenschaften aufweist, wenn der Anteil an $Ti_2AlC$ im Versatz in einem Anteil im Bereich von 6 bis 8 Masse-% im Versatz vorliegt. Insoweit kann vorgesehen sein, dass $Ti_2AlC$ in einem Anteil von wenigstens 1 Masse-%, bevorzugter in einem Anteil von wenigstens 2 Masse-%, noch bevorzugter in einem Anteil von wenigstens 3 Masse-% und noch bevorzugter in einem Anteil von wenigstens 6 Masse-% im Versatz vorliegt. Ferner kann insoweit vorgesehen sein, dass $Ti_2AlC$ in einem Anteil von höchstens 10 Masse-% im Versatz vorliegt, bevorzugter in einem Anteil von höchstens 9 Masse-% und noch bevorzugter in einem Anteil von höchstens 8 Masse-%.

Bevorzugt ist vorgesehen, dass $Ti_2AlC$ in einem Anteil im Bereich von 1 bis 10 Masse-% im Versatz vorliegt, noch bevorzugter in einem Anteil im Bereich von 2 bis 9 Masse-% und noch bevorzugter in einem Anteil im Bereich von 6 bis 8 Masse-%.

Soweit im Einzelfall nicht anders angegeben, sind die hierin gemachten Angaben in Masse-%, soweit sie auf den Versatz bezogen sind, jeweils bezogen auf die Gesamtmasse des Versatzes.

Bevorzugt liegt $Ti_2AlC$ im erfindungsgemäßen Versatz feinkörnig vor, bevorzugt als Pulver, besonders bevorzugt als Pulver in einer Korngröße < 63 $\mu$m.

Sämtliche der hierin angegebenen Korngrößen können durch Siebanalyse ermittelt sein, bevorzugt gemäß DIN 66165-1:2016-08.

Nach einer bevorzugten Ausführungsform ist vorgesehen, dass das feinkörnige $Ti_2AlC$ zu Granalien granuliert im erfindungsgemäßen Versatz vorliegt. Besonders bevorzugt können diese Granalien eine Korngröße im Bereich von 63 $\mu$m bis 5 mm aufweisen. Zur Herstellung solcher Granalien kann feinkörniges $Ti_2AlC$ gemäß den aus dem Stand der Technik zur Herstellung von Granalien bekannten Technologien, also beispielsweise in einem Mischer oder auf einem Granulierteller, zu Granalien granuliert werden.

Erfindungsgemäß kann $Ti_2AlC$ in einem beliebigen Versatz zur Herstellung eines feuerfesten kohlenstoffgebundenen Steines als Antioxidans verwendet werden. Beispielsweise kann $Ti_2AlC$ in einem Versatz zur Herstellung eines Magnesiakohlenstoffsteines, zur Herstellung eines nicht basischen kohlenstoffgebundenen Steins oder zur Herstellung eines Alumina-Magnesia-Kohlenstoffsteines verwendet werden.

Die feuerfeste Grundkomponente des erfindungsgemäßen Versatzes kann demnach einen oder mehrere feuerfeste Rohstoffe auf Basis Magnesia (MgO), Alumina ($Al_2O_3$) oder Zirkonia ($ZrO_2$) umfassen. Nach einer Ausführungsform besteht die feuerfeste Grundkomponente zu wenigstens 90 Masse-%, bevorzugt zu wenigstens 95 Masse-%, aus wenigstens einem der Oxide MgO, $Al_2O_3$ oder $ZrO_2$. Die vorgemachten Angaben in Masse-% sind jeweils bezogen auf die Gesamtmasse der Grundkomponente.

Die feuerfeste Grundkomponente kann beispielsweise einen oder mehrere der folgenden feuerfesten Rohstoffe umfassen: Sintermagnesia, Schmelzmagnesia, Sinterkorund, Schmelzkorund, Tabulartonerde, Magnesiaspinell oder Zirkonia.

Nach einer Ausführungsform besteht die feuerfeste Grundkomponente aus einem oder mehreren feuerfesten Rohstoffen auf Basis Magnesia oder Alumina, insbesondere aus einem oder mehreren der folgenden feuerfesten Rohstoffe: Sintermagnesia, Schmelzmagnesia, Sinterkorund, Schmelzkorund, Tabulartonerde, Magnesiaspinell oder Zirkonia.

Nach einer besonders bevorzugten Ausführungsform dient der erfindungsgemäße Versatz zur Herstellung eines feuerfesten Magnesiakohlenstoffsteines. Denn zum einen hat sich erfindungsgemäß herausgestellt, dass $Ti_2AlC$ in Versätzen zur Herstellung von Magnesiakohlenstoffsteinen die Oxidation der Kohlenstoffkomponente besonders wirksam unterdrücken kann. Insbesondere hat sich jedoch, wie zuvor ausgeführt, herausgestellt, dass $Ti_2AlC$ in diesem Fall mit MgO der Grundkomponente während des Betriebseinsatzes Flexibilisierer bilden kann, durch welche die Duktilität des aus dem Versatz hergestellten Magnesiakohlenstoffsteines erheblich verbessert werden kann.

Insoweit ist nach einer bevorzugten Ausführungsform vorgesehen, dass die feuerfeste Grundkomponente einen oder mehrere feuerfeste Rohstoffe auf Basis Magnesia umfasst. Insoweit kann nach einer bevorzugten Ausführungsform vorgesehen sein, dass die feuerfeste Grundkomponente zu wenigstens 90 Masse-%, bevorzugt zu wenigstens 95 Masse-% aus MgO besteht. Die vorgemachten Angaben in Masse-% sind jeweils bezogen auf die Gesamtmasse der Grundkomponente.

Nach einer bevorzugten Ausführungsform ist insoweit vorgesehen, dass die feuerfeste Grundkomponente einen oder mehrere der folgenden feuerfesten Rohstoffe umfasst: Sintermagnesia oder Schmelzmagnesia. Nach einer bevorzugten Ausführungsform ist vorgesehen, dass die feuerfeste Grundkomponente aus einem oder mehreren feuerfesten Rohstoffen auf Basis Magnesia besteht, insbesondere aus einem oder mehreren der folgenden feuerfesten Rohstoffe: Sintermagnesia oder Schmelzmagnesia.

Der Anteil der feuerfesten Grundkomponente im erfindungsgemäßen Versatz liegt bevorzugt im Bereich von 70 bis 97 Masse-%, besonders bevorzugt im Bereich von 77 bis 93 Masse-%.

Die Grundkomponente liegt bevorzugt in körniger Form vor, besonders bevorzugt in einer Korngröße von höchstens 5 mm.

Der Anteil der Kohlenstoffkomponente im erfindungsgemäßen Versatz liegt bevorzugt im Bereich von 2 bis 29 Masse-%, besonders bevorzugt im Bereich von 5 bis 21 Masse-%.

Die Kohlenstoffkomponente besteht bevorzugt aus einem oder mehreren festen Trägern freien Kohlenstoffs sowie zum weiteren aus einem oder mehreren verkokbaren Bindemitteln.

Feste Träger freien Kohlenstoffs liegen bevorzugt in Form eines oder mehrerer der folgenden Rohstoffe vor: Graphit oder Ruß. Besonders bevorzugt liegt der feste Träger freien Kohlenstoffs in Form von Graphit vor. Die festen Träger freien Kohlenstoffs der Kohlenstoffkomponente liegen bevorzugt in einem Anteil im Bereich von 1 bis 25 Masse-% im Versatz vor, bevorzugter in einem Anteil im Bereich von 2 bis 20 Masse-% und noch bevorzugter in einem Anteil im Bereich von 4 bis 15 Masse-%.

Die verkokbaren Bindemittel der Kohlenstoffkomponente liegen in Form von organischen Bindemitteln vor, also auf kohlenstoffbasierten Bindemitteln, die unter Temperatureinwirkung verkoken. Solch verkokende Bindemittel liegen bevorzugt in Form eines oder mehrerer der folgenden Rohstoffe vor: Pech oder Kunstharz. Besonders bevorzugt liegt das verkokbare Bindemittel in Form von Kunstharz vor. Die verkokbaren Bindemittel der Kohlenstoffkomponente liegen bevorzugt in einem Anteil im Bereich von 1 bis 6 Masse-% vor, noch bevorzugter in einem Anteil im Bereich von 2 bis 6 Masse-%.

Nach einer bevorzugten Ausführungsform ist vorgesehen, dass die Gesamtmasse aus Grundkomponente, Kohlenstoffkomponente und $Ti_2AlC$ im Versatz im Bereich von 95 bis 100 Masse-%, bevorzugter im Bereich von 97 bis 100 Masse-% und noch bevorzugter im Bereich von 99 bis 100 Masse-% liegt. Nach einer bevorzugten Ausführungsform ist vorgesehen, dass der Versatz ausschließlich aus der Grundkomponente, der Kohlenstoffkomponente und $Ti_2AlC$ besteht.

Entsprechend kann vorgesehen sein, dass der Versatz, neben der Grundkomponente, der Kohlenstoffkomponente und $Ti_2AlC$ weitere Komponenten in einer Gesamtmasse unter 5 Masse-%, bevorzugter unter 3 Masse-%, noch bevorzugter unter 1 Masse-% und noch bevorzugter keine weiteren Komponenten aufweist.

Zur Vermeidung der Bildung von hydratisierbaren Substanzen in einem aus dem erfindungsgemäßen Versatz hergestellten feuerfesten kohlenstoffgebundenen Stein kann vorgesehen sein, dass der erfindungsgemäße Versatz keinen Anteil an metallischem Aluminium aufweist. Insoweit liegt der Anteil an metallischem Aluminium im Versatz nach einer bevorzugten Ausführungsform unter 1 Masse-% und besonders bevorzugt bei 0 Masse-% (beziehungsweise unterhalb der Nachweisgrenze).

Da sich $Ti_2AlC$ im Übrigen als wirksameres Antioxidans als metallisches Silizium erwiesen hat und, im Gegensatz zu Silizium, darüber hinaus, wie vorstehend ausgeführt, die Duktilität des aus dem Versatz hergestellten kohlenstoffgebundenen Steines erhöhen kann, ist nach einer Ausführungsform vorgesehen, dass der erfindungsgemäße Versatz metallisches Silizium in einem Anteil unter 1 Masse-% oder auch mit 0 Masse-% aufweist (beziehungsweise unterhalb der Nachweisgrenze).

Gegenstand der Erfindung ist auch ein Verfahren zur Herstellung eines feuerfesten Steines mit einem Koksgerüst, das die folgenden Schritte umfasst:

Zur Verfügungstellung eines erfindungsgemäßen Versatzes;
Beaufschlagen des Versatzes mit Temperatur derart, dass die Kohlenstoffkomponente verkokt und der Versatz einen feuerfesten Stein mit einem Koksgerüst ausbildet.

Ein nach diesem Verfahren hergestellter Stein mit einem Koksgerüst zeichnet sich durch ein charakteristisches Gefüge aus. Dieses Gefüge ist gebildet aus der Grundkomponente, die in ein Koksgerüst aus der Kohlenstoffkomponente beziehungsweise in ein Koksgerüst aus dem verkokenden Bindemittel der Kohlenstoffkomponente eingebettet ist. In das Koksgerüst ist auch das Antioxidans in Form von $Ti_2AlC$ eingebettet.

Bevorzugt werden die Komponenten des Versatzes miteinander gemischt, bevor sie mit Temperatur beaufschlagt werden.

Ferner kann vorgesehen sein, dass die, gegebenenfalls miteinander vermischten Komponenten des Versatzes, vor ihrem Beaufschlagen mit Temperatur geformt werden, beispielsweise durch Pressen. Beispielsweise kann der Versatz vor dem Beaufschlagen mit Temperatur zu einem Formkörper geformt werden, insbesondere durch Pressen.

Der - gegebenenfalls geformte - Versatzes kann vor seinem Verkoken getempert werden, also derart mit Temperatur beaufschlagt werden, dass sich leichtflüchtige Bestandteile des Bindemittels verflüchtigen. Bevorzugt kann der Versatz unterhalb einer Temperatur von 350°C getempert werden, besonders bevorzugt bei einer Temperatur im Bereich von 200 bis 330°C.

Das Beaufschlagen des Versatzes mit Temperatur derart, dass die Kohlenstoffkomponente beziehungsweise das verkokbare Bindemittel der Kohlenstoffkomponente verkokt und der Versatz einen feuerfesten Stein mit einem Koksgerüst ausbildet, erfolgt bevorzugt in reduzierender Atmosphäre. Beispielsweise kann der - gegebenenfalls geformte und beispielsweise auch getemperte - Versatz während des Beaufschlagens mit Temperatur zur Ausbildung einer reduzierenden Atmosphäre in ein Kohlebett, beispielsweise in Kohlegrieß eingebettet sein.

Das Beaufschlagen des Versatzes mit Temperatur zur Ausbildung eines Koksgerüstes erfolgt bevorzugt bei einer Temperatur im Bereich von 500 bis 1.100°C, besonders bevorzugt bei einer Temperatur im Bereich von 700 bis 1.000°C, so dass die Kohlenstoffkomponente verkokt und der Versatz einen feuerfesten Stein mit einem Koksgerüst ausbildet.

Sowohl ein wie vorstehend erhaltener getemperter Versatz als auch ein wie vorstehend erhaltener Stein mit einem Koksgerüst weisen bereits eine gewisse Festigkeit auf, so dass sie jeweils transportiert und beispielsweise an den Ort ihres beabsichtigten Einsatzes transportiert und dort installiert werden können.

Besonders bevorzugt können sowohl ein wie vorstehend erhaltener getemperter Versatz als auch ein wie vorstehend erhaltener Stein mit einem Koksgerüst in einer Anlage zur sekundärmetallurgischen Behandlung einer Stahlschmelze verwendet werden, so dass ein solch getemperter Versatz oder ein solcher Stein mit einem Koksgerüst in einer solchen Anlage zur sekundärmetallurgischen Behandlung einer Stahlschmelze installiert werden können.

Zur Herstellung eines feuerfesten kohlenstoffgebundenen Steines, also eines Steines mit einer Kohlenstoffbindung, aus dem erfindungsgemäßen Versatz kann der mit einem Koksgerüst ausgebildete Stein weiter mit Temperatur derart beaufschlagt werden, dass die Kohlenstoffkomponente eine Kohlenstoffbindung ausbildet.

Ein solch weiteres Beaufschlagen des Steines mit Koksgerüst zur Herstellung eines kohlenstoffgebundenen Steines kann bevorzugt bei einer Temperatur im Bereich von 1.450 bis 1.650°C erfolgen, bevorzugt unter reduzierender Atmosphäre. Bevorzugt erfolgt ein solches Beaufschlagen mit Temperatur während des Betriebseinsatzes des verkokten Steines.

Ein aus dem erfindungsgemäßen Versatz hergestellter feuerfester kohlenstoffgebundener Stein, insbesondere ein durch das erfindungsgemäße Verfahren hergestellter kohlenstoffgebundener Stein, zeichnet sich durch ein charakteristisches Gefüge und charakteristische physikalische Eigenschaften aus.

So kann ein aus dem erfindungsgemäßen Versatz, insbesondere auch durch das erfindungsgemäße Verfahren hergestellter feuerfester kohlenstoffgebundener Stein (also ein Stein mit einer Kohlenstoffbindung) einen Elastizitätsmodul (E-Modul) unter 8 GPa aufweisen. Gleichzeitig kann ein solcher kohlenstoffgebundener Stein eine Kaltdruckfestigkeit im Bereich von 10 bis 18 MPa aufweisen. Der Elastizitätsmodul ist dabei bestimmt gemäß DIN EN ISO 12680-1:2007-05 und die Kaltdruckfestigkeit gemäß DIN EN 993-5:1998-12.

Das Gefüge eines unter reduzierender Atmosphäre gebrannten kohlenstoffgebundenen Steines ist gekennzeichnet durch die Grundkomponente, die in eine Kohlenstoffmatrix eingebettet ist. Charakteristisch für einen unter reduzierender Atmosphäre gebrannten kohlenstoffgebundenen Stein ist die Anwesenheit von carbidischen und nitridischen Phasen auf Basis Titan, die sich aus dem $Ti_2AlC$ gebildet haben. Bei diesen carbidischen und nitridischen Phasen kann es sich insbesondere um eine oder mehrere der Phasen TiC, TiN und $Ti_2CN$ handeln. Sofern die Grundkomponente MgO umfasst, ist charakteristisch ferner die Gegenwart von Magnesiaspinell im Bereich um die Körner der Grundkomponente sowie in der Kohlenstoffmatrix. In den Bereichen eines solch reduzierend gebrannter Steins, in denen dieser einer oxidischen Atmosphäre bei erhöhten Temperaturen ausgesetzt ist, beispielsweise während des Betriebseinsatzes, findet sich neben der Grundkomponente und der Kohlenstoffmatrix ein charakteristischer Mischspinell aus $2 MgO \cdot TiO_2$ und $MgO \cdot Al_2O_3$ ($Mg_9Al_2Ti_4O_{20}$).

Daneben kann sich die charakteristische Phase Perowskit ($CaO \cdot TiO_2$) finden.

Gegenstand der Erfindung ist auch die Verwendung von $Ti_2AlC$ als Antioxidans in Versätzen zur Herstellung von kohlenstoffgebundenen feuerfesten Erzeugnissen, wobei das $Ti_2AlC$ mit den Maßgaben verwendet werden kann, wie hierin ausgeführt.

Weitere Merkmale der Erfindung ergeben sich aus den Ansprüchen sowie den nachfolgend erläuterten Ausführungsbeispielen der Erfindung.

Sämtliche Merkmale der Erfindung können, einzeln oder in Kombination, beliebig miteinander kombiniert sein.

Für die nachfolgend erläuterten Ausführungsbeispiele der Erfindung wurden eine feuerfeste Grundkomponente aus Schmelzmagnesia, eine Kohlenstoffkomponente aus Graphit und Pech sowie $Ti_2AlC$ als Antioxidans zur Verfügung gestellt.

Die Schmelzmagnesia wurde in vier Kornfraktionen zur Verfügung gestellt, nämlich in einer Kornfraktion 3 mm bis 5 mm, in einer Kornfraktion 1 mm bis < 3 mm, in einer Kornfraktion 0,063 mm (63 $\mu$m) bis < 1 mm und in einer Mehlfraktion < 63 $\mu$m.

$Ti_2AlC$ wurde pulverförmig mit einer Korngröße < 63 $\mu$m zur Verfügung gestellt. Dabei lag das $Ti_2AlC$ zum einen pulverförmig (ungranuliert) und zum anderen in Form von Granalien mit einer Korngröße von 2 mm bis 4 mm und mit einer Korngröße von 0,063 mm (63 $\mu$m) bis < 2 mm vor.

Auf Basis dieser Komponenten wurden zwei erfindungsgemäße Versätze hergestellt, die in der nachfolgenden Tabelle 1 mit V2 und V3 bezeichnet sind. Ferner wurde zu Vergleichszwecken ein weiterer Versatz erstellt, der in der nachfolgenden Tabelle mit V1 bezeichnet ist. Der Versatz V1 weist gegenüber den Versätzen V2 und V3 kein $Ti_2AlC$ als Antioxidans auf. Die Angaben in Tabelle 1 sind Angaben in Masse-%, jeweils bezogen auf die Gesamtmasse des jeweiligen Versatzes.

Tabelle 1

| Rohstoff | V1 | V2 | V3 |
|---|---|---|---|
| Schmelzmagnesia 3 - 5mm | 25,48 | 25,48 | 25,48 |
| Schmelzmagnesia 1 - < 3 mm | 27,94 | 27,94 | 22,77 |
| Schmelzmagnesia 0,063 - < 1mm | 19,59 | 19,59 | 17,89 |
| Schmelzmagnesia < 0,063mm | 13,72 | 6,89 | 13,72 |
| Graphit | 8,82 | 8,82 | 8,82 |
| Pech | 0,98 | 0,98 | 0,98 |
| Kunstharz | 3,47 | 3,47 | 3,47 |
| $Ti_2AlC$ 2 - 4mm (granuliert) | - | - | 5,16 |
| $Ti_2AlC$ 0,063 - < 2mm (granuliert) | - | - | 1,71 |
| $Ti_2AlC$ < 0,063mm | - | 6,83 | - |

Die Versätze wurden gemischt und durch Pressen mit einem Pressdruck von 140 MPa zu Zylindern gepresst. Diese Zylinder wurden zunächst unter reduzierender Atmosphäre für zwei Stunden bei einer Temperatur von 300°C getempert, so dass sich die leichtflüchtigen Bestandteile das Pechs und des Kunstharzes verflüchtigten. Anschließend ließ man die Zylinder abkühlen.

Im Anschluss wurden die Zylinder in reduzierender Atmosphäre auf eine Temperatur von 1.600°C aufgeheizt.

Während des Aufheizens verkokten das Pech und das Kunstharz bei etwa 700 bis 900°C und bildeten ein Koksgerüst aus, so dass die Zylinder anschließend als verkokte Steine mit einem Koksgerüst vorlagen.

Die verkokten Steine wurden weiter auf 1.600°C aufgeheizt und für sechs Stunden unter reduzierender Atmosphäre mit einer Temperatur von 1.600°C beaufschlagt. Danach wurden aus diesen Steinen jeweils feuerfeste kohlenstoffgebundene Steine, also Steine mit einer Kohlenstoffbindung erhalten.

Zur Herstellung der reduzierenden Atmosphäre wurden die Zylinder während des Brandes in Kohlegrieß eingebettet.

Das Gefüge der danach erhaltenen kohlenstoffgebundenen Steine wies jeweils Schmelzmagnesia auf, die in eine Matrix aus Kohlenstoff eingebettet war.

Darüber hinaus wiesen die aus den erfindungsgemäßen Versätzen V2 und V3 hergestellten kohlenstoffgebundenen Steine die charakteristischen Phasen Magnesiaspinell, TiC, TiN und $Ti_2CN$ auf. $Ti_2AlC$ konnte nicht mehr nachgewiesen werden. Ferner waren keine Spuren von $Al_4C_3$ detektierbar.

Ferner wiesen die aus den erfindungsgemäßen Versätzen V2 und V3 gebrannten kohlenstoffgebundenen Steine charakteristische physikalische Werte auf. Insbesondere wiesen die aus den Versätzen V2 und V3 hergestellten kohlenstoffgebundenen Steine gegenüber dem aus dem Versatz V1 hergestellten kohlenstoffgebundenen Stein einen deutlich reduzierten Elastizitätsmodul bei einer noch guten Kaltdruckfestigkeit auf.

Die an den aus den Versätzen V1, V2 und V3 hergestellten kohlenstoffgebundenen Steinen gemessenen physikalischen Werte sind in der nachfolgenden Tabelle 2 angegeben. Dabei ist der aus dem Versatz V1 hergestellte kohlenstoffgebundene Stein mit V1, der aus dem Versatz V2 hergestellte kohlenstoffgebundene Stein mit V2 und der aus dem Versatz V3 hergestellte kohlenstoffgebundene Stein mit V3 bezeichnet.

Tabelle 2

| Physikalischer Wert | V1 | V2 | V3 |
|---|---|---|---|
| $\Delta m/m_0$ [%] | -4,38 | -1,19 | -2,42 |
| $\Delta V/V_0$ [%] | 1,01 | 3,74 | 4,70 |
| E-Modul axial [GPa] | 8,35 | 2,70 | 2,89 |
| E-Modul radial [GPa] | 12,81 | 6,68 | 7,01 |
| Dichte [$g/cm^3$] | 2,88 | 2,85 | 2,83 |
| Porosität [%] | 13,53 | 15,04 | 15,70 |
| Kaltdruckfestigkeit [MPa] | 22,05 | 14,51 | 12,25 |

Der Wert $\Delta m/m_0$ bezeichnet die Massenänderung des gepressten, nicht mit Temperatur beaufschlagen Zylinders gegenüber dem kohlenstoffgebundenen Stein. Entsprechend bezeichnet $\Delta V/V_0$ die Volumensänderung des gepressten, nicht mit Temperatur beaufschlagen Zylinders gegenüber dem kohlenstoffgebundenen Stein.

Die geringere Massenabnahme bei den Steinen V2 und V3 gegenüber dem Stein zeigt die Wirksamkeit $Ti_2AlC$ als Antioxidans. Dabei konnte bei den Steinen V2 und V3 durch die Gegenwart von $Ti_2AlC$ die Oxidation von Kohlenstoff im Versatz und dessen anschließendes Entweichen in der Gasphase unterdrückt werden.

Der E-Modul (Elastizitätsmodul) axial bezeichnet den in Axialrichtung des Zylinders bestimmten E-Modul und der E-Modul radial den in Radialrichtung des Zylinders bestimmten E-Modul. Der E-Modul wurde bestimmt gemäß DIN EN ISO 12680-1:2007-05.

Die Dichte wurde bestimmt gemäß DIN EN 993-1:1995-04.

Die Porosität bezeichnet die gemessene offene Porosität und wurde ebenfalls bestimmt gemäß DIN EN 993-1:1995-04.

Die Kaltdruckfestigkeit wurde bestimmt gemäß DIN EN 993-5:1998-12.

Deutlich zu erkennen ist der bei den Steinen V2 und V3 gegenüber dem Stein V1 erheblich reduzierte Elastizitätsmodul. Dieser indiziert eine deutlich höhere Duktilität der Steine V2 und V3 gegenüber dem Stein V1.

Dabei weisen die Steine V2 und V3 gleichzeitig noch gute Werte für die Kaltdruckfestigkeit auf.

**Patentansprüche**

1. Versatz zur Herstellung eines feuerfesten kohlenstoffgebundenen Steines, umfassend die folgenden Komponenten:

    1.1 eine feuerfeste Grundkomponente;
    1.2 eine Kohlenstoffkomponente;
    1.3 $Ti_2AlC$.

2. Versatz nach Anspruch 1 mit einem Anteil an $Ti_2AlC$ im Bereich von 1 bis 10 Masse-%.

3. Versatz nach wenigstens einem der vorhergehenden Ansprüche, bei dem die feuerfeste Grundkomponente einen oder mehrere feuerfeste Rohstoffe auf Basis Magnesia, Alumina oder Zirkonia umfasst.

4. Versatz nach wenigstens einem der vorhergehenden Ansprüche, bei dem die feuerfeste Grundkomponente zu wenigstens 90 Masse-% aus wenigstens einem der Oxide MgO, $Al_2O_3$ oder $ZrO_2$ besteht.

5. Versatz nach wenigstens einem der vorhergehenden Ansprüche, bei dem die feuerfeste Grundkomponente einen oder mehrere der folgenden feuerfesten Rohstoffe umfasst: Sintermagnesia, Schmelzmagnesia, Sinterkorund, Schmelzkorund, Tabulartonerde, Magnesiaspinell oder Zirkonia.

6. Versatz nach wenigstens einem der vorhergehenden Ansprüche, bei dem die feuerfeste Grundkomponente aus einem oder mehreren feuerfesten Rohstoffe auf Basis Magnesia, Alumina oder Zirkonia besteht.

7. Versatz nach wenigstens einem der vorhergehenden Ansprüche, bei dem die feuerfeste Grundkomponente aus einem oder mehreren der folgenden feuerfesten Rohstoffe besteht: Sintermagnesia, Schmelzmagnesia, Sinterkorund, Schmelzkorund, Tabulartonerde, Magnesiaspinell oder Zirkonia.

8. Versatz nach wenigstens einem der vorhergehenden Ansprüche mit einem Anteil der feuerfesten Grundkomponente im Bereich von 70 bis 97 Masse-%.

9. Versatz nach wenigstens einem der vorhergehenden Ansprüche, bei dem die Kohlenstoffkomponente aus einem oder mehreren festen Trägern freien Kohlenstoffs sowie zum weiteren aus einem oder mehreren verkokbaren Bindemitteln besteht.

10. Versatz nach Anspruch 9 mit Trägern freien Kohlenstoffs in Form eines oder mehrere der folgenden Rohstoffe: Graphit oder Ruß.

11. Versatz nach wenigstens einem der vorhergehenden Ansprüche mit einem Anteil der Kohlenstoffkomponente im Bereich von 2 bis 29 Masse-%.

12. Verfahren zur Herstellung eines feuerfesten Steines mit Koksgerüst, umfassend die folgenden Schritte:

   a. Zur Verfügungstellung eines Versatzes nach wenigstens einem der vorhergehenden Ansprüche;
   b. Beaufschlagen des Versatzes mit Temperatur derart, dass die Kohlenstoffkomponente verkokt und der Versatz einen Stein mit einem Koksgerüst ausbildet.

13. Verfahren zur Herstellung eines feuerfesten kohlenstoffgebundenen Steines, umfassend die Schritte nach Anspruch 12 und den folgenden weiteren Schritt:
   c. Beaufschlagen des Stein mit einem Koksgerüst mit Temperatur derart, dass die verkokte Kohlenstoffkomponente eine Kohlenstoffbindung ausbildet.

14. Feuerfester kohlenstoffgebundener Stein, hergestellt aus einem Versatz nach wenigstens einem der Ansprüche 1 bis 11, mit einem E-Modul unter 8 GPa.

15. Verwendung von $Ti_2AlC$ als Antioxidans in Versätzen zur Herstellung von kohlenstoffgebundenen feuerfesten Erzeugnissen.


**Claims**

1. Composition brick for producing a refractory carbon-bonded brick, comprising the following components:

   1.1 a refractory basic component,
   1.2 a carbon component,
   1.3 $Ti_2AlC$.

2. Composition brick according to claim 1 with a proportion of $Ti_2AlC$ in range from 1 to 10% by mass.

3. Composition brick according to at least one of the preceding claims, in which the refractory basic component comprises one or more magnesia, alumina or zirconia-based refractory raw materials.

4. Composition brick according to at least one of the preceding claims in which the refractory basic component consists at least 90% by mass of at least one of the oxides MgO, $Al_2O_3$ or $ZrO_2$.

5. Composition brick according to at least one of the preceding claims in which the refractory basic component comprises one or more of the following refractory raw materials: sinter magnesia, fused magnesia, sinter corundum, fused corundum, tabular alumina, magnesia spinel or zirconia.

6. Composition brick according to at least one of the preceding claims in which the refractory basic components consists of one or more magnesia, alumina or zirconia-based refractor raw materials.

7. Composition brick according to at least one of the preceding claims in which the refractory basic component consists of one or more of the following refractory raw materials: sinter magnesia, fused magnesia, sinter corundum, fused corundum, tabular alumina, magnesia spinel or zirconia.

8. Composition brick according to at least one of the preceding claims with a proportion of the refractory basic component in the range from 70 to 97% by mass.

9. Composition brick according to at least one of the preceding claims in which the carbon component consists of one or more carriers of free carbon as well as also of one or more coking binding agents.

10. Composition brick according to claim 9 with carriers of free carbon in the form of one or more of the following raw materials: graphite or soot.

11. Composition brick according to at least one of the preceding claims with a proportion of the carbon component in the range from 2 to 29 % by mass.

12. Method of producing a refractory brick with a coke network, comprising the following steps:

a. Provision of a composition according to at least one of the preceding claims;
b. Application of temperature to the composition so that the carbon component undergoes coking and the composition forms a brick with a coke network.

13. Method of producing a refractory, carbon-bonded brick, comprising the steps according to claim 12 and the following further step:
c. Application of temperature to the stone with a coke network so that the coked carbon component forms a carbon bond.

14. Refractory carbon-bonded stone, produced from a component in accordance with at least one of claims 1 to 11 with an E module below 8 GPa.

15. Use of $Ti_2AlC$ as an antioxidant in compositions for producing carbon-bonded, refractory products.

**Revendications**

1. Composé, destiné à fabriquer une pierre réfractaire liée par carbone, comprenant les composants suivants :

1.1 un composant de base réfractaire ;
1.2 un composant carboné ;
1.3 du $Ti_2AlC$.

2. Composé selon la revendication 1, pourvu d'une part de $Ti_2AlC$ de l'ordre de 1 à 10 % en masse.

3. Composé selon au moins l'une quelconque des revendications précédentes, dans lequel le composant de base réfractaire comprend une ou plusieurs matières premières réfractaires sur base de magnésie, d'alumine ou de zirconium.

4. Composé selon au moins l'une quelconque des revendications précédentes, dans lequel le composant de base réfractaire est constitué à raison d'au moins 90 % en masse d'au moins l'un des oxydes MgO, $Al_2O_3$ ou $ZrO_2$.

5. Composé selon au moins l'une quelconque des revendications précédentes, dans lequel le composant de base réfractaire comprend une ou plusieurs des matières premières réfractaires suivantes : magnésie frittée, magnésie fondue, corindon fritté, corindon fondu, argile tabulaire, spinelle magnésien ou zirconium.

6. Composé selon au moins l'une quelconque des revendications précédentes, dans lequel le composant de base réfractaire est constitué d'une ou de plusieurs matières premières réfractaires sur base de magnésie, d'alumine ou de zirconium.

7. Composé selon au moins l'une quelconque des revendications précédentes, dans lequel le composant de base réfractaire est constitué d'une ou de plusieurs des matières premières réfractaires suivantes : magnésie frittée, magnésie fondue, corindon fritté, corindon fondu, argile tabulaire, spinelle magnésien ou zirconium.

8. Composé selon au moins l'une quelconque des revendications précédentes, pourvu d'une part du composant de base réfractaire de l'ordre de 70 à 97 % en masse.

9. Composé selon au moins l'une quelconque des revendications précédentes, dans lequel le composant carboné est constitué d'un ou de plusieurs carbones exempts de supports solides, ainsi que par ailleurs d'un ou de plusieurs agents liants cokéfiables.

10. Composé selon la revendication 9, pourvu de carbone exempt de supports sous la forme d'une ou de plusieurs des matières premières suivantes : le graphite ou le noir de carbone.

11. Composé selon au moins l'une quelconque des revendications précédentes, pourvu d'une part de composant carboné de l'ordre de 2 à 29 % en masse.

12. Procédé, destiné à fabriquer une pierre réfractaire avec une structure en coke, comprenant les étapes suivantes consistant à :

    a. mettre à disposition un composé selon au moins l'une quelconque des revendications précédentes ;
    b. exposer le composé à une température, de sorte que le composant carboné se cokéfie et que le composé forme une pierre pourvue d'une structure en coke.

13. Procédé, destiné à fabriquer une pierre réfractaire pourvue d'une structure en coke, comprenant les étapes selon la revendication 12 et l'étape supplémentaire suivante consistant à :
c. exposer la pierre pourvu d'une structure en coke à une température, de sorte que le composant carboné cokéfié forme une liaison de carbone.

14. Pierre réfractaire liée par carbone, fabriquée à partir d'un composé selon au moins l'une quelconque des revendications 1 à 11, avec un module d'élasticité inférieur à 8 GPa.

15. Utilisation de $Ti_2AlC$ comme antioxydant dans des composés destinés à fabriquer des produits réfractaires liés par carbone.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- KR 20040106622 A